# EUROPÄISCHE PATENTANMELDUNG

(11) **EP 3 771 378 A1**
(43) Veröffentlichungstag der Anmeldung: **03.02.2021**
(21) Anmeldenummer: 20183509.7
(22) Anmeldetag: 01.07.2020
(51) Int. Cl.: A47J 43/07

(54) **SYSTEM, KÜCHENMASCHINE, ENTNEHMBARER EINSATZ FÜR EINE KÜCHENMASCHINE UND ENTNAHMEVORRICHTUNG**

(30) Priorität: 30.07.2019 DE 102019211288
(71) Anmelder: BSH Hausgeräte GmbH, 81739 München (DE)
(72) Erfinder: Slakan, Gregor, 1420 Trbovlse (SI); Berzelak, Matej, 3334 Luce (SI); Krüger, Tobias, 80639 München (DE); Ziegler, Felicitas, 83371 Stein a.d. Traun (DE)

(57) **Zusammenfassung**

Es wird ein System beschrieben, das eine Küchenmaschine (100) mit einem Behälter (104) umfasst. Die Küchenmaschine (100) ist ausgebildet, zumindest einen entnehmbaren Einsatz (107) in dem Behälter (104) aufzunehmen. Der Einsatz (107) weist ein erstes Verbindungselement (200) auf. Des Weiteren umfasst das System eine Entnahmevorrichtung (210), die einen Griff (211) und ein zweites Verbindungselement (212) umfasst. Das System ist ausgebildet, es einem Nutzer zu ermöglichen, die Entnahmevorrichtung (210) an dem Griff (211) zu halten, und dabei das zweite Verbindungselement (212) mit dem ersten Verbindungselement (200) zu verbinden. Das System ist ferner ausgebildet, es einem Nutzer zu ermöglichen, durch Krafteinwirkung an der Entnahmevorrichtung (210) den Einsatz (107) aus dem Behälter (104) der Küchenmaschine (100) zu ziehen, wenn das erste Verbindungselement (200) und das zweite Verbindungselement (202) miteinander verbunden sind.

## Beschreibung

Die Erfindung betrifft ein System mit einer Küchenmaschine, die einen entnehmbaren Einsatz aufweist, und mit einer Entnahmevorrichtung zur Entnahme des Einsatzes. Des Weiteren betrifft die Erfindung eine Küchenmaschine, einen entnehmbaren Einsatz für eine Küchenmaschine sowie eine Entnahmevorrichtung für einen entnehmbaren Einsatz.

Zur Verarbeitung von Nahrungsmitteln kann eine Küchenmaschine mit einem Behälter zur Aufnahme von Nahrungsmitteln und mit ein oder mehreren unterschiedlichen entnehmbaren Einsätzen (insbesondere Werkzeugen) zur Verarbeitung von Nahrungsmitteln in dem Behälter verwendet werden. Beispielhafte Werkzeuge sind ein Schneidewerkzeug bzw. Messer, ein Rührwerkzeug, ein Besen, ein Teig- bzw. Knetwerkzeug, etc. Des Weiteren kann die Küchenmaschine ausgebildet sein, Nahrungsmittel zu temperieren, z.B. zu erhitzen, um ein Nahrungsmittel zu garen, oder zu kühlen (z.B. für die Herstellung von Speiseeis).

Im Rahmen der Herstellung eines Nahrungsmittels kann es erforderlich sein, unterschiedliche Werkzeuge bzw. Einsätze zu verwenden. Dabei kann der Austausch eines Einsatzes für einen Nutzer ggf. schwierig und/oder unkomfortabel sein, insbesondere dann, wenn das Nahrungsmittel in dem Behälter der Küchenmaschine relativ heiß oder relativ kalt ist.

Das vorliegende Dokument befasst sich mit der technischen Aufgabe, die Entnahme und/oder den Austausch von Einsätzen in dem Behälter einer Küchenmaschine für einen Nutzer der Küchenmaschine zu erleichtern.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein System beschrieben, das eine Küchenmaschine mit einem Behälter umfasst. Der Behälter kann ein Volumen von 2 Liter oder mehr aufweisen. Die Küchenmaschine ist ausgebildet, zumindest einen entnehmbaren Einsatz in dem Behälter aufzunehmen. Beispielhafte Einsätze sind: ein Rührwerkzeug, ein Knethaken, ein Messer, ein Dampfkorb und/oder ein Raspelwerkzeug. Die Küchenmaschine kann ausgebildet sein, sequentiell unterschiedliche Einsätze in dem Behälter (insbesondere an einem Kupplungselement in dem Behälter) aufzunehmen. Beispielsweise kann zum Schneiden eines Nahrungsmittels ein Messer verwendet werden. Des Weiteren kann ein Dampfkorb verwendet werden, um Dampfgaren eines Nahrungsmittels durchzuführen. Mittels eines Knethakens kann z.B. ein Teig innerhalb des Behälters hergestellt werden, etc.

Die Küchenmaschine kann einen Motor umfassen, der eingerichtet ist, den Einsatz (insbesondere ein Werkzeug) anzutreiben (z.B. über das Kupplungselement der Küchenmaschine). Alternativ oder ergänzend kann die Küchenmaschine ausgebildet sein, den Behälter zu temperieren (z.B. zu erwärmen oder zu kühlen).

Der Einsatz in dem Behälter der Küchenmaschine kann ein erstes Verbindungselement aufweisen. Insbesondere können mehrere (ggf. alle) Einsätze der Küchenmaschine jeweils ein erstes Verbindungselement aufweisen. Dabei kann das erste Verbindungselement eine Form und/oder eine Eigenschaft aufweisen, die es ermöglichen, das erste Verbindungselement lösbar mit einem komplementären zweiten Verbindungselement zu verbinden.

Das System umfasst ferner eine Entnahmevorrichtung, die einen Griff und ein zweites Verbindungselement umfasst. Das zweite Verbindungselement kann dabei komplementär zu dem ersten Verbindungselement sein. Insbesondere können die beiden Verbindungselement ausgebildet sein, eine lösbare Verbindung zu bilden (z.B. durch magnetische Kräfte und/oder durch Formschluss). Die lösbare Verbindung kann dabei ausreichend stark sein, um es einem Nutzer zu ermöglichen, über die Verbindung zwischen den beiden Verbindungselementen eine Kraft auf den in den Behälter der Küchenmaschine eingesetzten Einsatz auszuüben, und um dadurch den Einsatz aus dem Behälter herauszuziehen.

Insbesondere kann das System ausgebildet sein, es einem Nutzer zu ermöglichen, die Entnahmevorrichtung an dem Griff zu halten, und dabei das zweite Verbindungselement mit dem ersten Verbindungselement zu verbinden. Zu diesem Zweck ist die Entnahmevorrichtung bevorzugt stabförmig und/oder als Stab ausgebildet. Der Griff kann dabei (ggf. mittig und/oder an einem Ende) an dem Stab angeordnet sein. Das zweite Verbindungselement kann an einem Ende des Stabs angeordnet sein. So kann das zweite Verbindungselement in besonders komfortabler Weise zu dem Einsatz, insbesondere zu dem ersten Verbindungselement des Einsatzes, geführt werden, um die Verbindung zwischen dem ersten und dem zweiten Verbindungselement herzustellen.

Das System kann außerdem ausgebildet sein, es einem Nutzer zu ermöglichen, durch Krafteinwirkung an der Entnahmevorrichtung den Einsatz aus dem Behälter der Küchenmaschine zu ziehen, wenn das erste Verbindungselement und das zweite Verbindungselement miteinander verbunden sind. Es kann somit einem Nutzer ermöglicht werden, in komfortabler und sicherer Weise einen Einsatz aus dem Behälter einer Küchenmaschine zu entnehmen (auch dann, wenn sich in dem Behälter z.B. ein heißes Nahrungsmittel befindet).

Der Einsatz kann ein erstes Kupplungselement umfassen, und die Küchenmaschine kann in dem Behälter ein zu dem ersten Kupplungselement komplementäres zweites Kupplungselement umfassen. Das erste Kupplungselement und das zweite Kupplungselement können ausgebildet sein, den Einsatz an einer definierten und/oder festen Position innerhalb des Behälters zu lagern.

Dabei können das erste Kupplungselement und das zweite Kupplungselement komplementäre Rastelemente umfassen, durch die eine Rastverbindung zwischen dem ersten Kupplungselement und dem zweiten Kupplungselement gebildet wird. Die Rastverbindung kann derart ausgebildet sein, dass die Rastverbindung (nur) durch Aufbringen einer Mindestzugkraft an dem Einsatz wieder gelöst werden kann. Durch die Bereitstellung einer Rastverbindung kann eine besonders zuverlässige Lagerung eines Einsatzes innerhalb des Behälters bewirkt werden (insbesondere bei Verwendung eines von dem Motor der Küchenmaschine angetriebenen Einsatzes bzw. Werkzeugs).

Das System kann ausgebildet sein, es einem Nutzer zu ermöglichen, durch Krafteinwirkung an der Entnahmevorrichtung den Einsatz von dem zweiten Kupplungselement abzuziehen. Insbesondere kann das System ausgebildet sein, es einem Nutzer zu ermöglichen, durch Aufbringen der Mindestzugkraft an der Entnahmevorrichtung den Einsatz von dem zweiten Kupplungselement abzuziehen. Zu diesem Zweck kann die (lösbare) Verbindung zwischen dem ersten Verbindungselement und dem zweiten Verbindungselement ausgebildet sein, Kräfte zu übertragen, die gleich wie oder größer als die erforderliche Mindestzugkraft zum Lösen der Rastverbindung sind. So kann eine zuverlässige Entnahme eines Einsatzes ermöglicht werden.

Das erste Verbindungelement kann ausgebildet sein, über den Einsatz in Richtung zu der oberen Kante des Behälters hinauszustehen. Alternativ oder ergänzend kann das erste Verbindungselement ausgebildet sein, sich von dem Einsatz in Richtung zu der oberen Kante des Behälters hin zu erstrecken. Dabei ist der Einsatz typischerweise in einem unteren Bereich des Behälters angeordnet.

Die Entnahmevorrichtung kann ausgebildet sein, es einem Nutzer zu ermöglichen, das zweite Verbindungelement an das erste Verbindungselement heranzuführen, um das zweite Verbindungselement mit dem ersten Verbindungselement zu verbinden, und um dadurch den Einsatz aus dem Behälter ziehen zu können. Die Bereitstellung eines über den Einsatz hinausstehenden ersten Verbindungselements ermöglicht es dem Nutzer, die beiden Verbindungselemente in komfortabler Weise miteinander zu verbinden.

Das erste Verbindungelement kann einen Kopf umfassen, der über einen, im Vergleich zu dem Kopf, schmalen Steg (fest) mit dem Einsatz verbunden ist (ähnlich einer Stecknadel oder eines Nagels). Das zweite Verbindungselement kann eine Öffnung bzw. ein Loch bzw. einen Durchbruch umfassen, durch die bzw. das bzw. den der Kopf geführt werden kann, um eine Verbindung zwischen dem ersten und dem zweiten Verbindungselement herzustellen. Alternativ kann in umgekehrter Weise das erste Verbindungselement eine Öffnung aufweisen, und das zweite Verbindungselement kann einen Steg mit einem Kopf aufweisen. So kann in zuverlässiger Weise eine lösbare Verbindung zwischen den beiden Verbindungselementen gebildet werden, über die relativ hohe Kräfte von der Entnahmevorrichtung auf den Einsatz bewirkt werden können.

Die Öffnung kann einen Einfädelbereich umfassen, der ausreichend groß ist, damit der Kopf des ersten Verbindungselements durch die Öffnung geführt werden kann. Des Weiteren kann die Öffnung einen Einhakbereich (mit reduziertem Durchmesser) umfassen, der ausreichend klein ist, um den durch den Einfädelbereich der Öffnung geführten Kopf des ersten Verbindungselements zurückzuhalten. Die beiden Bereiche sind bevorzugt miteinander verbunden und/oder gehen bevorzugt (fließend) ineinander über.

Alternativ oder ergänzend kann das zweite Verbindungselement eine (relativ kurze) Laufschiene umfassen bzw. bilden, in die der Kopf des ersten Verbindungselement eingeschoben werden kann, um eine Verbindung zwischen dem ersten und dem zweiten Verbindungselement herzustellen. Die Laufschien kann eine Länge aufweisen, die zwischen 0,8 und 2 mal dem Durchmesser des Kopfes des ersten Verbindungselements entspricht. Die Laufschiene kann in einem Einfädelbereich weiter sein als in einem Einhakbereich. Mit anderen Worten, die Laufschiene kann enger werden. Dabei kann die Laufschiene in dem Einhakbereich eine Weite aufweisen, die nicht unwesentlich größer als die Dicke des Stegs des ersten Verbindungselements ist. Andererseits kann die Weite der Laufschiene im Einfädelbereich 2 oder mehr mal größer als die Dicke des Stegs des ersten Verbindungselements sein. So wird es einem Nutzer ermöglicht, in komfortabler und zuverlässiger Weise die beiden Verbindungselemente miteinander zu verbinden.

Der Einfädelbereich und der Einhakbereich können derart nebeneinander angeordnet sein, dass der durch die Öffnung oder in die Laufschiene geführte Kopf des ersten Verbindungselements von dem Einfädelbereich zu dem Einhakbereich hin bewegt wird, wenn die Entnahmevorrichtung von dem Einsatz und/oder von dem ersten Verbindungselement weg bewegt (insbesondere gezogen) wird. Durch die Bereitstellung einer Öffnung bzw. einer Laufschiene mit unterschiedlich großen Bereichen kann in besonders effizienter Weise eine lösbare Verbindung zwischen den Verbindungselementen bewirkt werden.

In einem bevorzugten Beispiel ist die Entnahmevorrichtung als Spatel ausgebildet ist, der an einem ersten Ende eine Spatelfläche und an einem gegenüberliegenden zweiten Ende das zweite Verbindungselement aufweist. Für eine Küchenmaschine wird typischerweise sowieso ein Spatel benötigt, um Nahrungsmittel von der Innenwand des Behälters zu entfernen. Somit kann durch die Verwendung eines Spatels als Entnahmevorrichtung ein besonders effizientes System bereitgestellt werden.

Wie bereits oben dargelegt, kann die Küchenmaschine mit mehreren unterschiedlichen, austauschbaren Einsätzen betrieben werden, wie z.B. einem Rührwerkzeug, einem Knethaken, einem Messer, einem Dampfkorb und/oder einem Raspelwerkzeug. Die Entnahmevorrichtung kann ausgebildet sein, für mehrere unterschiedliche, insbesondere für alle verfügbaren oder zumindest für alle zum Kochen und/oder in einer warmen bzw. heißen Umgebung einsetzbaren, Einsätze der Küchenmaschine verwendet zu werden. Insbesondere kann die Entnahmevorrichtung ausgebildet sein, mehrere unterschiedliche, insbesondere alle verfügbaren oder zumindest alle zum Kochen und/oder in einer warmen bzw. heißen Umgebung einsetzbaren, Einsätze der Küchenmaschine gemäß dem beschriebenen Verfahren aus der Küchenmaschine zu entnehmen. So kann der Komfort für einen Nutzer weiter erhöht werden, da eine einzige Entnahmevorrichtung für unterschiedliche (insbesondere für alle oder zumindest für alle zum Kochen und/oder in einer warmen bzw. heißen Umgebung einsetzbaren) Einsätze der Küchenmaschine verwendet werden kann.

Gemäß einem weiteren Aspekt der Erfindung wird ein Einsatz (z.B. ein Rührwerkzeug, ein Knethaken, ein Messer, ein Dampfkorb und/oder ein Raspelwerkzeug) für eine Küchenmaschine beschrieben. Der Einsatz ist ausgebildet, in einen Behälter der Küchenmaschine eingesetzt und (nach Verwendung) aus dem Behälter entnommen zu werden. Der Einsatz umfasst ein erstes Verbindungselement, das ausgebildet ist, eine Verbindung mit einem komplementären zweiten Verbindungselement einer Entnahmevorrichtung zu bilden, um es einem Nutzer zu ermöglichen, den Einsatz mittels der Entnahmevorrichtung aus dem Behälter zu entnehmen, insbesondere zu ziehen. Der Einsatz weist somit ein erstes Verbindungselement auf, das ausgebildet ist, mit einem komplementären zweiten Verbindungselement lösbar verbunden zu werden, um den Einsatz über die lösbare Verbindung aus dem Behälter ziehen zu können. Durch die Bereitstellung eines derartigen Einsatzes kann der Komfort einer Küchenmaschine erhöht werden.

Gemäß einem weiteren Aspekt der Erfindung wird eine Küchenmaschine beschrieben, die einen Behälter und einen in diesem Dokument beschriebenen entnehmbaren Einsatz umfasst.

Gemäß einem weiteren Aspekt der Erfindung wird eine Entnahmevorrichtung für einen aus einem Behälter einer Küchenmaschine entnehmbaren Einsatz beschrieben. Die Entnahmevorrichtung ist dabei bevorzugt als Spatel für die Küchenmaschine ausgebildet.

Die Entnahmevorrichtung umfasst einen Griff, der es einem Nutzer ermöglicht, die Entnahmevorrichtung in einer (einzigen) Hand zu halten. Des Weiteren weist die Entnahmevorrichtung ein (zweites) Verbindungselement auf, das ausgebildet ist, eine Verbindung mit einem komplementären (ersten) Verbindungselement des Einsatzes zu bilden, um es dem Nutzer zu ermöglichen, den Einsatz mittels der Entnahmevorrichtung aus dem Behälter der Küchenmaschine zu entnehmen, insbesondere zu ziehen.

Es ist zu beachten, dass jegliche Aspekte des in diesem Dokument beschriebenen Systems und/oder des beschriebenen Einsatzes und/oder der beschriebenen Entnahmevorrichtung und/oder der beschriebenen Küchenmaschine in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
- Figur 1: ein Blockdiagramm einer beispielhaften Küchenmaschine;
- Figur 2a: ein beispielhaftes Werkzeug bzw. einen beispielhaften Einsatz und eine beispielhafte Entnahmevorrichtung mit jeweils einem Verbindungselement;
- Figur 2b: ein beispielhaftes Verbindungselement einer Entnahmevorrichtung;
- Figur 3: eine beispielhafte Küchenmaschine mit einem Kupplungselement für einen Einsatz;
- Figuren 4a und 4b: einen beispielhaften Spatel in einer Vorderansicht und in eine Rückansicht;
- Figuren 5a und 5b: einen bespielhaften Spatel bei der Entnahme eines Werkzeugs aus dem Behälter einer Küchenmaschine; und
- Figuren 6a und 6b: einen beispielhaften Spatel bei dem Tragen eines Werkzeugs.

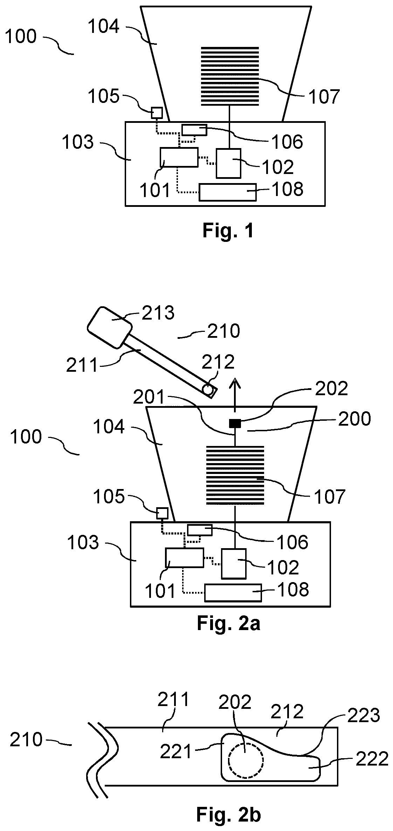

Wie eingangs dargelegt, befasst sich das vorliegende Dokument mit der Erhöhung des Komforts eines Nutzers bei der Entnahme und/oder bei dem Wechsel eines Werkzeugs bzw. eines Einsatzes einer Küchenmaschine. In diesem Zusammenhang zeigt Fig. 1 eine beispielhafte Hausmaschine 100. Die in Fig. 1 dargestellte Küchenmaschine 100 umfasst einen Behälter 104, der auf einer Basis 103 der Küchenmaschine angeordnet sein kann und in dem Zutaten für ein herzustellendes Nahrungsmittel verarbeitet werden können, z.B. mittels eines Werkzeugs bzw. Einsatzes 107, das bzw. der ggf. durch einen Motor 102 angetrieben wird. Dabei können ggf. unterschiedliche Werkzeuge 107 (z.B. ein Messer, ein Knethaken oder ein Besen) an dem Motor 102 montiert werden. Die Küchenmaschine 100 kann eingerichtet sein, den Behälter 104 mittels einer Temperierungseinheit 105 zu temperieren, z.B. zu kühlen oder zu erwärmen.

Des Weiteren kann die Küchenmaschine 100 ein oder mehrere Sensoren 106 umfassen, die eingerichtet sind, Sensordaten in Bezug auf die Küchenmaschine 100 (insbesondere in Bezug auf einen Zustand der Küchenmaschine 100) und/oder in Bezug auf das herzustellende Nahrungsmittel zu erfassen. Ein beispielhafter Sensor 106 ist ein Temperatursensor, der eingerichtet ist, Temperaturdaten in Bezug auf die Temperatur des Behälters 104 und/oder des darin enthaltenen Nahrungsmittels zu erfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Außerdem kann die Küchenmaschine 100 eine Benutzerschnittstelle 108 umfassen, die es einem Nutzer ermöglicht, Steuereingaben an die Küchenmaschine 100 zu tätigen (z.B. über ein oder mehrere Knöpfe), und/oder die es der Küchenmaschine 100 ermöglicht, Rückmeldungen an einen Nutzer der Küchenmaschine 100 auszugeben (z.B. über einen Bildschirm). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer Datenbank herunterzuladen). Ferner kann die Steuereinheit 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen.

Wie bereits oben dargelegt, kann die Küchenmaschine 100 unterschiedliche Werkzeuge und/oder Einsätze 107 aufweisen, die bei Bedarf in den Behälter 104 eingebracht und nach Verwendung wieder entnommen werden können. Beispielhafte Werkzeuge und/oder Einsätze 107 sind ein Rührer, ein Messer, ein Knethaken, ein Dampfkorb, etc. Die Entnahme eines Werkzeugs und/oder Einsatzes 107 kann dabei je nach Zustand der Küchenmaschine 100 und/oder des Nahrungsmittels in dem Behälter 104 schwierig und/oder unkomfortabel sein. Beispielsweise kann es vorkommen, dass das Nahrungsmittel das Werkzeug und/oder den Einsatz 107 vollständig bedeckt, so dass das Werkzeug und/oder der Einsatz 107 nicht für den Nutzer zugänglich ist, ohne dass der Nutzer das Nahrungsmittel berührt. Alternativ oder ergänzend kann das Nahrungsmittel in dem Behälter 104 relativ heiß oder kalt sein, was ebenfalls die Entnahme eines Werkzeugs und/oder Einsatzes 107 erschwert. mm Folgenden wird allgemein auf einen Einsatz 107 eingegangen, der auch ein Werkzeug umfasst.

Fig. 2a zeigt eine Küchenmaschine 100 mit einem Einsatz 107, der ein Verbindungselement 200 aufweist, das mit einem komplementären Verbindungselement 212 einer Entnahmevorrichtung 210 verbunden werden kann, so dass von der Entnahmevorrichtung 210 eine Zugkraft auf den Einsatz 107 ausgeübt werden kann, um den Einsatz 107 aus dem Behälter 104 der Küchenmaschine 100 zu entnehmen (dargestellt durch den Pfeil in Fig. 2a). Die Entnahmevorrichtung 210 weist einen Griff 211 für einen Nutzer der Entnahmevorrichtung 210 auf, um es dem Nutzer zu ermöglichen, die Entnahmevorrichtung 210 (mit einer Hand) zu halten, um einen Einsatz 107 aus dem Behälter 104 der Küchenmaschine 100 zu ziehen.

In dem in Fig. 2a dargestellten Beispiel weist das Verbindungelement 200 des Einsatzes 107 einen Steg 201 auf, der sich von dem Einsatz 107 weg in Richtung zur oberen Kante des Behälters 104 hin erstreckt. Der Steg 201 weist einen relativ kleinen Querschnitt auf. Des Weiteren weist das Verbindungselement 200 am Ende des Stegs 201 einen Kopf 202 mit einem relativ großen Querschnitt auf. Das Verbindungselement 200 kann somit die Form eines Nagels mit einem relativ dünnen Steg 201 und einem relativ großen Kopf 202 aufweisen. Wie in diesem Dokument dargelegt, ermöglicht der Kopf 202 eine effiziente und zuverlässige Entnahme eines Einsatzes 107 mittels einer Entnahmevorrichtung 210. Des Weiteren kann der Kopf 202 ausgebildet sein, es einem Nutzer zu ermöglichen, den Einsatz 107 in komfortabler Weise mit der Hand aus der Küchenmaschine 100 zu entnehmen.

Fig. 2b zeigt Details eines beispielhaften Verbindungselements 212 der Entnahmevorrichtung 210. Das Verbindungselement 212 kann als Loch oder Öffnung 223 ausgebildet sein, z.B. als Öffnung 223 an einem Ende des Griffs 211 der Vorrichtung 210. Die Öffnung 223 kann einen Einfädelbereich 221 aufweisen, in dem die Öffnung 223 größer als der Querschnitt des Kopfes 202 des Verbindungselements 200 des Einsatzes 107 ist. In dem Einfädelbereich 221 kann somit der Kopf 202 des Verbindungselements 200 des Einsatzes 107 durch die Öffnung 223 geführt werden.

Des Weiteren weist die Öffnung 223 einen Einhakbereich 222 auf, in dem die Öffnung 223 kleiner als der Querschnitt des Kopfes 202 des Verbindungselements 200 des Einsatzes 107 ist. In dem Einhakbereich 222 ist die Öffnung 223 derart ausgebildet, dass der Kopf 202 des Verbindungselements 200 nicht durch die Öffnung 223 gleiten kann, so dass die Entnahmevorrichtung 210 über die ineinander verhakten Verbindungselemente 200, 212 mit dem Einsatz 107 verbunden ist.

Der Einhakbereich 222 ist dabei bevorzugt näher am Ende (ggf. des Griffs 211) der Vorrichtung 210 angeordnet als der Einfädelbereich 221. So kann es einem Nutzer ermöglicht werden, in komfortabler Weise die Entnahmevorrichtung 210 nach oben zu ziehen, um den mit der Entnahmevorrichtung 210 verbundenen Einsatz 107 aus dem Behälter 104 der Küchenmaschine 100 zu ziehen. Nach der Entnahme des Einsatzes 107 aus dem Behälter 104 kann der Kopf 202 des Verbindungselements 200 des Einsatzes 107 in den Einfädelbereich 221 der Öffnung 223 des Verbindungselements 200 der Entnahmevorrichtung 210 geschoben werden, um den Einsatz 107 und die Entnahmevorrichtung 210 voneinander zu trennen. So kann es einem Nutzer ermöglicht werden, in komfortabler Weise einen Einsatz 107 aus dem Behälter 104 einer Küchenmaschine 100 zu entnehmen.

In einem bevorzugten Beispiel weist die Entnahmevorrichtung 210 die Funktion eines Spatels auf. Der Spatel weist an einem Ende des Griffs 211 eine Spatelfläche 213 auf, die z.B. aus einem Kunststoff besteht und/oder die elastisch ist. Des Weiteren kann der Spatel an dem gegenüberliegenden anderen Ende des Griffs 211 das Verbindungselement 212 zum Verbinden des Spatels mit einem Einsatz 107 einer Küchenmaschine 100 aufweisen. So kann in besonders effizienter Weise eine Entnahmevorrichtung 210 für die Einsätze 107 einer Küchenmaschine 100 bereitgestellt werden.

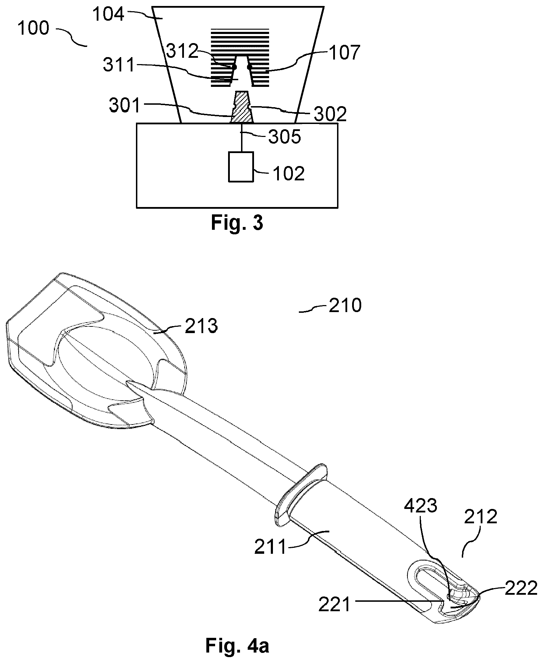

Fig. 3 zeigt weitere Details einer beispielhaften Küchenmaschine 100. Die Küchenmaschine 100 weist ein mit dem Motor 102, insbesondere mit der Antriebswelle 305 des Motors 102, verbundenes Kupplungselement 301 auf. Die ein oder mehreren unterschiedlichen Einsätze 107 der Küchenmaschine 100 können ein entsprechendes und/oder komplementäres Kupplungselement 311 aufweisen. Die Kupplungselemente 301, 311 können derart ausgebildet sein, dass zwischen einem Einsatz 107 und der Küchenmaschine 100 eine mechanische Verbindung hergestellt werden kann,
- durch die der Einsatz 107 an einer definierten und/oder festen Position innerhalb des Behälters 104 gehalten wird; und/oder
- über die ein Antriebsmoment des Motors 102 an den Einsatz 107 übertragen werden kann, um den Einsatz 107 zu bewegen.

Die Kupplungselemente 301, 311 können Rastelemente 302, 312 aufweisen, die ineinander einrasten, wenn die Kupplungselemente 301, 311 miteinander verbunden sind. Insbesondere kann durch die Rastelemente 302, 312 bewirkt werden, dass es für die Entnahme eines Einsatz 107 erforderlich ist, dass eine bestimmte Einrast-Kraft (d.h. eine Mindestzugkraft in Richtung zur oberen Kante des Behälters 104) überwunden wird, bevor sich die Rastelemente 302, 312 lösen, und so der Einsatz 107 aus dem Behälter 104 entnommen werden kann. Durch die Verwendung von Rastelementen 302, 312 kann einerseits eine komfortable Entnahme ermöglicht werden und anderseits zuverlässig bewirkt werden, dass ein Einsatz 107 während des Betriebs der Küchenmaschine 100 mit der Küchenmaschine 100 verbunden bleibt.

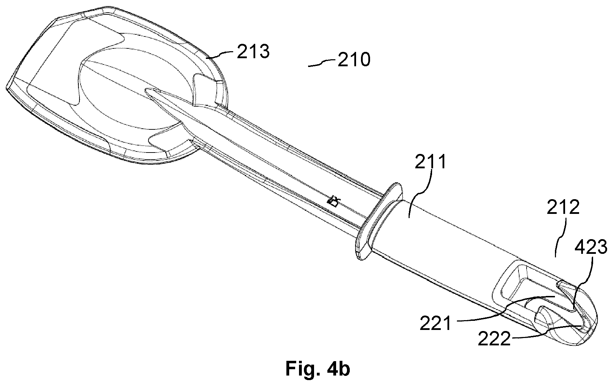

Figuren 4a und 4b zeigen weitere beispielhafte Ausgestaltungen einer Entnahmevorrichtung 210 (insbesondere eines Spatels). Das Verbindungselement 212 weist in diesem Fall eine (relativ kurze) Laufschiene 423 auf, in die der Kopf 202 des Verbindungselements 200 eines Werkzeugs 107 eingeführt werden kann. Die Laufschiene 423 kann dazu genutzt werden, das Verbindungselements 200 eines Werkzeugs 107 zu greifen, um das Werkzeug 107 auf dem Behälter 104 einer Küchenmaschine 100 zu entnehmen.

Die Laufschiene 423 kann in dem Einfädelbereich 221 weiter sein als in dem Einhakbereich 222. So kann ein komfortables Einfädeln des Verbindungselements 200 eines Werkzeugs 107 ermöglicht werden. Des Weiteren kann so bewirkt werden, dass ein Werkzeug 107 zuverlässig mit der Entnahmevorrichtung 210 getragen werden kann.

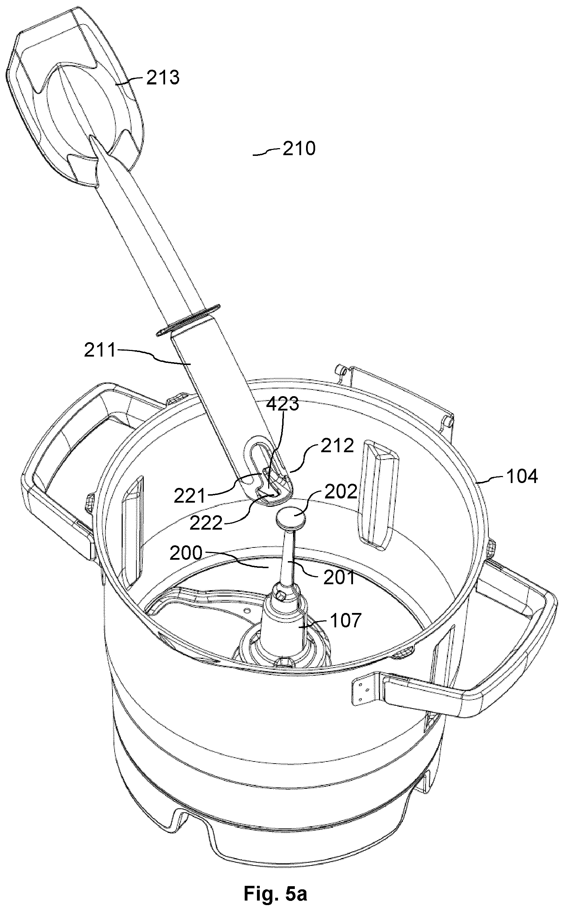

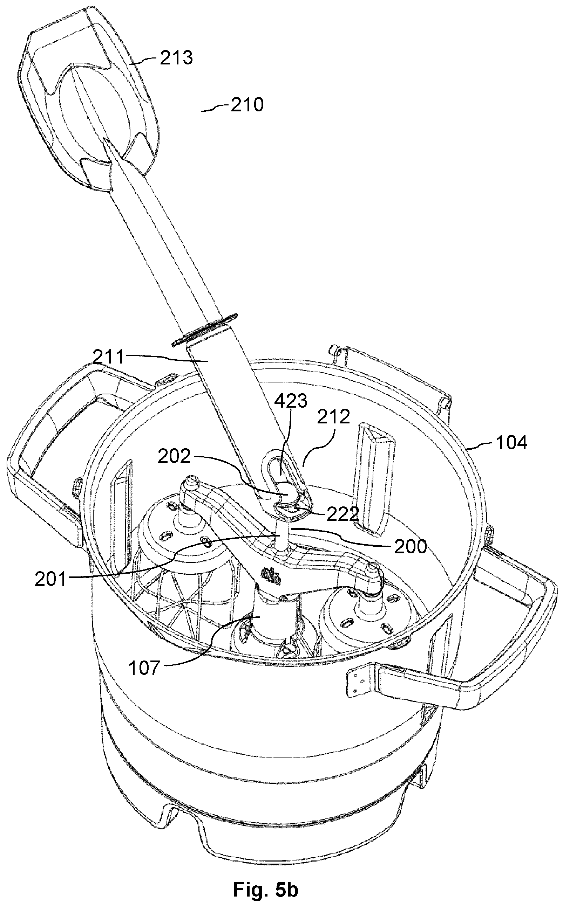

Figuren 5a und 5b veranschaulichen, wie ein Werkzeug 107, das sich in einem Behälter 104 einer Küchenmaschine 100 befindet, mit der Entnahmevorrichtung 210 gegriffen werden kann, und/oder wie eine Verbindung zwischen dem Verbindungselement 212 der Entnahmevorrichtung 210 und dem Verbindungselement 200 eines Werkzeugs 107 hergestellt werden kann.

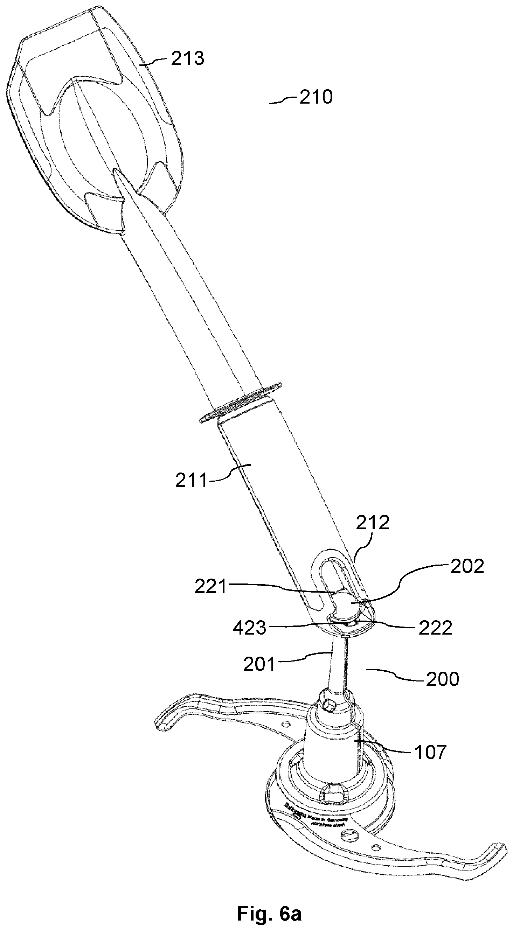

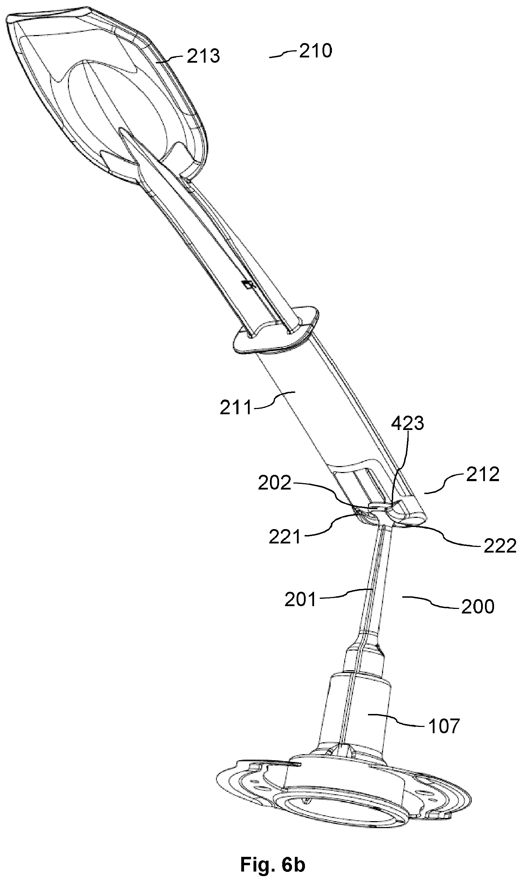

Figuren 6a und 6b zeigen eine beispielhafte Entnahmevorrichtung 210, die mit einem Werkzeug 107, insbesondere mit einem Messer-Werkzeug, verbunden ist. Dabei ist zu sehen, dass die Laufschiene 423 schräg von dem Griff 211 der Entnahmevorrichtung 210 weg verlaufen kann (z.B. in einem Winkel zwischen 30° und 60°). So kann ein besonders komfortables Einfädeln und Tragen eines Werkzeugs 107 ermöglicht werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Küchenmaschine und/oder der vorgeschlagenen Entnahmevorrichtung und/oder des vorgeschlagenen Einsatzes veranschaulichen sollen.

## Patentansprüche

1. System, das umfasst,
- eine Küchenmaschine (100) mit einem Behälter (104); wobei die Küchenmaschine (100) ausgebildet ist, zumindest einen entnehmbaren Einsatz (107) in dem Behälter (104) aufzunehmen; wobei der Einsatz (107) ein erstes Verbindungselement (200) aufweist; und
- eine Entnahmevorrichtung (210), die einen Griff (211) und ein zweites Verbindungselement (212) umfasst; wobei das System ausgebildet ist, es einem Nutzer zu ermöglichen,
- die Entnahmevorrichtung (210) an dem Griff (211) zu halten, und dabei das zweite Verbindungselement (212) mit dem ersten Verbindungselement (200) zu verbinden; und
- durch Krafteinwirkung an der Entnahmevorrichtung (210) den Einsatz (107) aus dem Behälter (104) der Küchenmaschine (100) zu ziehen, wenn das erste Verbindungselement (200) und das zweite Verbindungselement (202) miteinander verbunden sind.

2. System gemäß Anspruch 1, wobei
- der Einsatz (107) ein erstes Kupplungselement (311) umfasst;
- die Küchenmaschine (100) in dem Behälter (104) ein zu dem ersten Kupplungselement (311) komplementäres zweites Kupplungselement (301) umfasst;
- das erste Kupplungselement (311) und das zweite Kupplungselement (301) ausgebildet sind, den Einsatz (107) an einer definierten und/oder festen Position innerhalb des Behälters (104) zu lagern; und
- das System ausgebildet ist, es einem Nutzer zu ermöglichen, durch Krafteinwirkung an der Entnahmevorrichtung (210) den Einsatz (107) von dem zweiten Kupplungselement (301) abzuziehen.

3. System gemäß Anspruch 2, wobei
- das erste Kupplungselement (311) und das zweite Kupplungselement (301) komplementäre Rastelemente (302, 312) umfassen, durch die eine Rastverbindung zwischen dem ersten Kupplungselement (311) und dem zweiten Kupplungselement (301) gebildet wird; wobei die Rastverbindung durch Aufbringen einer Mindestzugkraft an dem Einsatz (107) gelöst werden kann; und
- das System ausgebildet ist, es einem Nutzer zu ermöglichen, durch Aufbringen der Mindestzugkraft an der Entnahmevorrichtung (210) den Einsatz (107) von dem zweiten Kupplungselement (301) abzuziehen.

4. System gemäß einem der vorhergehenden Ansprüche, wobei
- das erste Verbindungelement (200) über den Einsatz (107) in Richtung einer oberen Kante des Behälters (104) hinaussteht; und/oder
- sich das erste Verbindungelement (200) von dem Einsatz (107) in Richtung der oberen Kante des Behälters (104) erstreckt; und
- die Entnahmevorrichtung (210) ausgebildet ist, es einem Nutzer zu ermöglichen, das zweite Verbindungelement (212) an das erste Verbindungselement (200) heranzuführen, um das zweite Verbindungselement (202) mit dem ersten Verbindungselement (200) zu verbinden, und um dadurch den Einsatz (107) aus dem Behälter (104) ziehen zu können.

5. System gemäß einem der vorhergehenden Ansprüche, wobei
- das erste Verbindungelement (200) einen Kopf (202) umfasst, der über einen, im Vergleich zu dem Kopf (202), schmalen Steg (201) mit dem Einsatz (107) verbunden ist; und
- das zweite Verbindungselement (212) eine Öffnung (223) umfasst, durch die der Kopf (202) geführt werden kann, um eine Verbindung zwischen dem ersten und dem zweiten Verbindungselement (200, 212) herzustellen; und/oder
- das zweite Verbindungselement (212) eine Laufschiene (423) umfasst, in die der Kopf (202) geschoben werden kann, um eine Verbindung zwischen dem ersten und dem zweiten Verbindungselement (200, 212) herzustellen.

6. System gemäß Anspruch 5, wobei
- die Öffnung (223) einen Einfädelbereich (221) umfasst, der ausreichend groß ist, damit der Kopf (202) des ersten Verbindungselements (200) durch die Öffnung (223) geführt werden kann; und
- die Öffnung (223) einen Einhakbereich (222) umfasst, der ausreichend klein ist, um den durch den Einfädelbereich (221) der Öffnung (223) geführten Kopf (202) des ersten Verbindungselements (200) zurückzuhalten.

7. System gemäß einem der Ansprüche 5 bis 6, wobei die Laufschiene (423) in einem Einfädelbereich (221) weiter ist als in einem Einhakbereich (222) der Laufschiene (423).

8. System gemäß einem der Anspruch 6 bis 7, wobei der Einfädelbereich (221) und der Einhakbereich (222) derart nebeneinander angeordnet sind, dass der Kopf (202) des ersten Verbindungselements (200) von dem Einfädelbereich (221) zu dem Einhakbereich (222) hin bewegt wird, wenn die Entnahmevorrichtung (210) von dem Einsatz (107) und/oder von dem ersten Verbindungselement (200) weg bewegt wird.

9. System gemäß einem der vorhergehenden Ansprüche, wobei
- die Entnahmevorrichtung (210) stabförmig ist; und
- das erste Verbindungselement (200) an einem Ende der stabförmigen Entnahmevorrichtung (210) angeordnet ist.

10. System gemäß einem der vorhergehenden Ansprüche, wobei die Entnahmevorrichtung (210) als Spatel ausgebildet ist, der an einem ersten Ende eine Spatelfläche (213) und an einem gegenüberliegenden zweiten Ende das zweite Verbindungselement (212) aufweist.

11. System gemäß einem der vorhergehenden Ansprüche, wobei
- die Küchenmaschine (100) einen Motor (102) umfasst, der eingerichtet ist, den Einsatz (107) anzutreiben; und/oder
- die Küchenmaschine (100) ausgebildet ist, eine Mehrzahl von unterschiedlichen Einsätzen (107) in dem Behälter (104) aufzunehmen; und/oder
- die Küchenmaschine (100) ausgebildet ist, den Behälter (104) zu temperieren.

12. Einsatz (107) für eine Küchenmaschine (100); wobei
- der Einsatz (107) ausgebildet ist, in einen Behälter (104) der Küchenmaschine (100) eingesetzt und aus dem Behälter (104) entnommen zu werden; und
- der Einsatz (107) ein erstes Verbindungselement (200) umfasst, das ausgebildet ist, eine Verbindung mit einem komplementären zweiten Verbindungselement (212) einer Entnahmevorrichtung (210) zu bilden, um es einem Nutzer zu ermöglichen, den Einsatz (107) mittels der Entnahmevorrichtung (210) aus dem Behälter (104) zu entnehmen, insbesondere zu ziehen.

13. Küchenmaschine (100), die einen Behälter (104) und einen entnehmbaren Einsatz (107) gemäß Anspruch 12 umfasst.

14. Entnahmevorrichtung (210) für einen aus einem Behälter (104) einer Küchenmaschine (100) entnehmbaren Einsatz (107), wobei
- die Entnahmevorrichtung (210) einen Griff (211) umfasst, der es einem Nutzer ermöglicht, die Entnahmevorrichtung (210) in einer Hand zu halten; und
- die Entnahmevorrichtung (210) ein Verbindungselement (212) aufweist, das ausgebildet ist, eine Verbindung mit einem komplementären Verbindungselement (200) des Einsatzes (107) zu bilden, um es dem Nutzer zu ermöglichen, den Einsatz (107) mittels der Entnahmevorrichtung (210) aus dem Behälter (104) der Küchenmaschine (100) zu entnehmen, insbesondere zu ziehen.

15. Entnahmevorrichtung (210) gemäß Anspruch 14, wobei die Entnahmevorrichtung (210) als Spatel ausgebildet ist.
